# FASCICULE DE BREVET EUROPEEN

(11) **EP 2 842 805 B1**
(45) Date de publication et mention de la délivrance du brevet: **16.06.2021**
(21) Numéro de dépôt: 14177817.5
(22) Date de dépôt: 21.07.2014
(51) Int. Cl.: B60Q 1/00, B60K 11/08

(54) **Ensemble lumineux à dispositif de support permettant le passage d'un flux d'air vers un radiateur de véhicule automobile**
Leuchteneinheit mit Haltevorrichtung, die den Durchlass eines Luftstroms zu einem Heizkörper eines Kraftfahrzeugs erlaubt
Light assembly with support device allowing the passage of an air flow to an automobile radiator

(30) Priorité: 26.08.2013 FR 1358167
(43) Date de publication de la demande: 04.03.2015
(73) Titulaire: PSA Automobiles SA, 78300 Poissy (FR)
(72) Inventeur: Mozucha, Jozef, 92001 Hlohovec (SK); Matusik, Martin, 92001 Hlohovec (SK)

(56) Documents cités:
- EP-A2- 1 577 162
- DE-A1- 19 836 526
- DE-A1-102011 120 363
- FR-A- 1 034 340
- JP-A- H0 891 057
- US-A1- 2003 043 590
- US-A1- 2003 188 902
- Sarkowarrior: , 12 septembre 2005 (2005-09-12), XP055155990, Extrait de l'Internet: URL:http://up.autotitre.com/24f125b9b3.jpg [extrait le 2014-12-01]

## Description

L'invention concerne les véhicules automobiles, et plus précisément les avertisseurs lumineux dits « feux de pénétration » qui équipent certains véhicules automobiles, comme par exemple des véhicules de pompiers, de secouristes, ou de forces de l'ordre.

Comme le sait l'homme de l'art, de nombreux véhicules dits d'intervention sont équipés de feux de pénétration destinés à compléter leurs autres avertisseurs lumineux, comme par exemple leur gyrophare placé sur leur toit, afin de permettre aux automobilistes qui les précèdent de mieux les remarquer en cas d'urgence, en particulier dans des conditions de circulation dense. Ce type d'équipement a été proposé du fait que lorsqu'un véhicule d'intervention est placé juste derrière un autre véhicule avec son gyrophare en fonctionnement, le conducteur de ce dernier véhicule ne peut généralement pas observer ce gyrophare dans les rétroviseurs de son véhicule du fait qu'il est placé trop haut, ce qui peut ralentir, voire empêcher, l'intervention en cours.

Lorsque le véhicule d'intervention n'a pas besoin d'être banalisé, les feux de pénétration peuvent être solidarisés à la face externe de la calandre ou sur une face supérieure du parechoc (ou bouclier) avant. Dans ce cas, ils ne nuisent pas à l'alimentation en air du radiateur qui est placé derrière la calandre. En revanche, lorsque le véhicule d'intervention a besoin d'être banalisé ou que l'on veut dissimuler les feux de pénétration, ces derniers sont généralement solidarisés entre la face interne de la calandre et le radiateur au moyen d'une plaque de support encombrante, ce qui nuit à l'alimentation en air du radiateur et donc peut induire une baisse des performances du véhicule d'intervention.

L'invention a donc notamment pour but d'améliorer la situation lorsque les feux de pénétration doivent être dissimulés dans le compartiment avant du véhicule.

On connait notamment du document DE102011120363 un véhicule conforme au préambule de la revendication 1.

Grâce à chaque première ouverture du dispositif de support du bloc de feux de pénétration du véhicule, on peut avantageusement laisser passer le flux d'air devant alimenter le radiateur afin de minimiser la réduction de l'alimentation de ce dernier induite par la présence du bloc, et donc minimiser la baisse de performances du véhicule.

La présente invention propose plus précisément un véhicule conforme à la partie caractérisante de la revendication 1.

L'agencement du dispositif de support avec une platine de support solidarisée à une poutre transversale offre un arrangement du bloc de feux de pénétration plus flexible que dans les solutions divulguées par l'art antérieur, notamment du document DE102011120363

Le dispositif de support du véhicule selon l'invention peut comporter d'autres caractéristiques qui peuvent être prises séparément ou en combinaison, et notamment :
- sa platine peut comprendre une première partie propre à supporter fixement le bloc, une deuxième partie prolongeant la première partie et comportant chaque première ouverture, et une troisième partie prolongeant la deuxième partie et propre à être solidarisée à l'équipement ;
   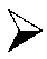 la deuxième partie peut prolonger la première partie vers le haut ;
   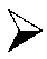 la troisième partie peut prolonger la deuxième partie vers l'arrière, en direction du radiateur ;
   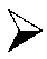 la première partie peut comprendre une deuxième ouverture propre à permettre un passage d'au moins un câble électrique destiné à alimenter électriquement le bloc ;
   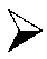 la première partie peut comprendre au moins une troisième ouverture propre à permettre une évacuation vers l'arrière de calories produites par le bloc.

D'autres caractéristiques et avantages de l'invention apparaîtront à l'examen de la description détaillée ci-après, et des dessins annexés, sur lesquels :
- la figure 1 illustre schématiquement, dans une vue en perspective, une petite partie d'une partie avant d'un véhicule, équipée d'un exemple de réalisation d'un ensemble lumineux selon l'invention, et
- la figure 2 illustre schématiquement, dans une vue en perspective, l'ensemble lumineux de la partie avant de véhicule automobile de la figure 1.

L'invention a notamment pour but de proposer un véhicule avec un dispositif D destiné à supporter un bloc de feux de pénétration BF devant être installé dans une partie avant PV du véhicule automobile.

Dans ce qui suit, on considère, à titre d'exemple non limitatif, que le véhicule automobile est une voiture d'intervention, par exemple banalisée et appartenant à des forces de l'ordre. Mais l'invention n'est pas limitée à ce type de véhicule automobile. Elle concerne en effet tout type de véhicule automobile comprenant une partie avant pouvant accueillir au moins un bloc de feux de pénétration entre un radiateur et une calandre.

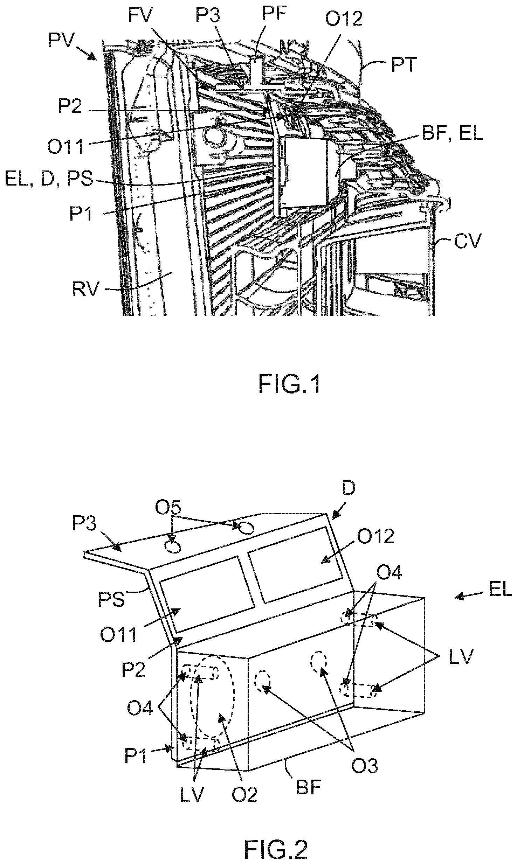

On a schématiquement représenté sur la figure 1 une partie d'une partie avant PV d'un véhicule automobile, comprenant un radiateur RV placé derrière une calandre CV et faisant partie d'une installation de chauffage/ climatisation, et un ensemble lumineux EL installé entre le radiateur RV et la calandre CV.

On entend ici par « ensemble lumineux » un ensemble comprenant un dispositif de support D selon l'invention et au moins un bloc de feux de pénétration BF solidarisé au dispositif de support D.

Par exemple, ce bloc de feux de pénétration BF comprend au moins un groupe de diodes électroluminescentes (ou LEDs), ou des ampoules au xénon ou halogènes.

Comme illustré sur les figures 1 et 2, un dispositif de support D, selon l'invention, comprend une platine PS propre à supporter fixement le (chaque) bloc (de feux de pénétration) BF et à être solidarisée à un équipement PT de la partie avant PV entre le radiateur RV et la calandre CV. Cette platine PT comprend au moins une première ouverture O1j qui est propre à laisser passer un flux d'air, provenant de l'extérieur du véhicule et ayant traversé la calandre CV, afin qu'il parvienne sur une face avant FV du radiateur RV en vue d'un échange de calories.

Ainsi, c'est principalement la partie de la platine PS, à laquelle est solidarisé le bloc BF, qui se trouve située sur le trajet du flux d'air (devant alimenter le radiateur RV), ce qui minimise la réduction de l'alimentation de ce dernier (RV) et donc minimise la baisse de performances du véhicule. Cette minimisation est d'autant plus importante que la surface de passage définie par les premières ouvertures O1j est grande.

On notera que selon l'invention dont un exemple non limitatif est illustré sur la figure 1, l'équipement PT auquel est solidarisée la platine PS est une poutre qui est implantée transversalement entre deux côtés latéraux opposés du véhicule.

On notera également que dans l'exemple non limitatif illustré sur les figures 1 et 2, la surface de passage est définie par deux premières ouvertures O11 et O12 (j = 1 ou 2). Mais elle pourrait être définie par une unique première ouverture O1 ou bien par plus de deux premières ouvertures O1.

On notera également qu'afin d'optimiser la déflexion vers les premières ouvertures O1j de la partie du flux d'air qui est issue de la calandre CV et qui parvient sur le bloc BF, on peut configurer ce dernier (BF) en lui donnant un profil choisi.

Comme illustré non limitativement sur les figures 1 et 2, la platine PS peut comprendre une première partie P1 propre à supporter fixement le bloc BF, une deuxième partie P2 prolongeant la première partie P1 et comportant chaque première ouverture 01j, et une troisième partie P3 prolongeant la deuxième partie P2 et propre à être solidarisée à l'équipement PT.

Dans cet exemple illustré, la deuxième partie P2 prolonge la première partie P1 vers le haut et la troisième partie P3 prolonge la deuxième partie P2 vers l'arrière, en direction du radiateur RV. Plus précisément, la deuxième partie P2 prolonge ici la première partie P1 vers le haut avec une légère inclinaison vers l'arrière du véhicule (typiquement comprise entre environ 5° et environ 30°), et la troisième partie P3 prolonge ici la deuxième partie P2 vers l'arrière selon une inclinaison sensiblement égale à 90°. Mais d'autres combinaisons d'inclinaisons peuvent être envisagées. Notamment, l'inclinaison de la deuxième partie P2 par rapport à la première partie P1 pourrait être sensiblement nulle (dans ce cas, les première P1 et deuxième P2 parties ne font qu'un).

Dans une variante de réalisation non illustrée, la deuxième partie P2 pourrait prolonger la première partie P1 vers le bas et la troisième partie P3 pourrait prolonger la deuxième partie P2 vers l'arrière, en direction du radiateur RV.

On notera que dans l'exemple non limitatif illustré sur la figure 2, les première P1 et deuxième P2 parties présentent une forme générale sensiblement rectangulaire. Mais elles pourraient présenter d'autres formes générales.

Par ailleurs, dans l'exemple non limitatif illustré sur la figure 2, la troisième partie P3 présente une forme générale de quadrilatère dont aucun des quatre côtés n'est parallèle aux trois autres côtés. Cela est destiné à faciliter l'intégration de l'ensemble lumineux EL dans l'espace libre compris entre le radiateur RV et la calandre CV. Mais elle pourrait présenter une forme générale sensiblement rectangulaire ou triangulaire.

On notera également que dans une variante de réalisation non illustrée la platine PS pourrait ne pas comporter de troisième partie P3. Dans ce cas, c'est la deuxième partie P2 qui est agencée de manière à pouvoir être solidarisée à l'équipement PT de support.

Comme illustré non limitativement sur la figure 2, la première partie P1 peut avantageusement comprendre une deuxième ouverture 02 propre à permettre le passage d'au moins un câble électrique destiné à alimenter électriquement le bloc BF. On notera que les dimensions de cette deuxième ouverture 02 peuvent être avantageusement choisies notablement plus grandes que celles nécessaires au passage du câble électrique afin de permettre une évacuation vers l'arrière d'une partie des calories produites par le bloc BF lorsqu'il est en fonctionnement.

En variante ou en complément, cette évacuation de calories vers l'arrière peut être également assurée par au moins une troisième ouverture 03 définie dans la première partie P1, comme illustré non limitativement sur la figure 2.

On notera que dans l'exemple non limitatif illustré sur la figure 2, la première partie P1 ne comprend qu'une seule troisième ouverture 03. Mais elle pourrait en comporter deux ou trois, voire plus de trois, pour faciliter l'évacuation des calories.

La solidarisation du bloc BF à la première partie P1 de la platine PS peut se faire par tout moyen connu de l'homme de l'art, et notamment par vissage, clippage, ou collage. Dans l'exemple non limitatif illustré sur la figure 2, cette solidarisation est réalisée par vissage, car cela facilite la désolidarisation. A cet effet, la première partie P1 comprend au moins deux quatrièmes ouvertures 04, destinées à permettre la traversée de tiges filetées de vis (non représentées), et le bloc BF comprend au moins deux logements LV munis chacun d'un filetage interne pour le vissage de l'une des tiges filetées de vis. On notera que la première partie P1 comprend ici quatre quatrièmes ouvertures 04 destinées à être placées en regard de quatre logements LV du bloc BF. Mais le nombre de quatrièmes ouvertures 04 et de logements LV pourrait être inférieur à quatre (par exemple égal à deux ou trois) ou bien supérieur à quatre (par exemple égal à cinq ou six).

La solidarisation de la platine PS à l'équipement PT peut se faire par tout moyen connu de l'homme de l'art, et notamment par vissage, clippage, ou collage. Dans l'exemple non limitatif illustré sur la figure 2, cette solidarisation est réalisée par vissage, car cela facilite la désolidarisation. A cet effet, la troisième partie P3 comprend au moins deux cinquièmes ouvertures 05, destinées à permettre la traversée de tiges filetées de vis (non représentées) en vue de leur vissage dans des filetages internes définis dans des trous correspondant de l'équipement PT ou de pattes de fixation PF solidarisées à ce dernier (PT) (comme illustré non limitativement), ou bien dans des boulons plaqués contre ce dernier (PT). On notera que la troisième partie P3 comprend ici deux cinquièmes ouvertures 05. Mais le nombre de cinquièmes ouvertures 05 pourrait être supérieur à deux (par exemple il pourrait être égal à trois ou quatre).

## Revendications

1. Véhicule automobile comprenant une partie avant (PV) comportant une calandre (CV), un radiateur (RV) placé derrière la calandre, un équipement (PT), un bloc de feux (BF) comportant un ensemble lumineux (EL), et un dispositif de support (D) dudit bloc, ledit dispositif (D) comprenant une platine (PS) propre à supporter fixement ledit bloc (BF) sur l'équipement (PT) de la partie avant (PV) entre ledit radiateur (RV) et ladite calandre (CV), ladite platine (PS) comprenant au moins une première ouverture (O1j) propre à laisser passer un flux d'air ayant traversé ladite calandre (CV) pour qu'il parvienne sur une face avant (FV) dudit radiateur (RV), **caractérisé en ce que** les feux du bloc de feux (BF) sont des feux de pénétration, et **en ce que** ledit équipement (PT) est une poutre implantée transversalement entre deux côtés latéraux opposés du véhicule.

2. Véhicule selon la revendication 1, **caractérisé en ce que** ladite platine (PS) comprend une première partie (P1) supportant fixement ledit bloc (BF), une deuxième partie (P2) prolongeant ladite première partie (P1) et comportant chaque première ouverture (O1j), et une troisième partie (P3) prolongeant ladite deuxième partie (P2) solidarisée audit équipement (PT).

3. Véhicule selon la revendication 2, **caractérisé en ce que** ladite deuxième partie (P2) prolonge ladite première partie (P1) vers le haut.

4. Véhicule selon l'une des revendications 2 et 3, **caractérisé en ce que** ladite troisième partie (P3) prolonge ladite deuxième partie (P2) vers l'arrière, en direction dudit radiateur (RV).

5. Véhicule selon l'une des revendications 2 à 4, **caractérisé en ce que** ladite première partie (P1) comprend une deuxième ouverture (O2) permettant un passage d'au moins un câble électrique destiné à alimenter électriquement ledit bloc (BF).

6. Véhicule selon l'une des revendications 2 à 5, **caractérisé en ce que** ladite première partie (P1) comprend au moins une troisième ouverture (O3) permettant une évacuation vers l'arrière de calories produites par ledit bloc (BF).

## Patentansprüche

1. Motor vehicle comprising a front part (PV) comprising a grille (CV), a radiator (RV) placed behind the grille, equipment (PT), a lamp unit (BF) comprising a light assembly (EL), and a device (D) for supporting the said unit, the said device (D) comprising a plate (PS) capable of fixedly supporting the said unit (BF) on the equipment (PT) of the front part (PV) between the said radiator (RV) and the said grille (CV), **characterized in that** the said plate (PS) comprises at least a first opening (O1j) capable of allowing a flow of air which has passed through the said grille (CV) to pass through so that it arrives on a front face (FV) of the vehicle, and **in that** the said plate (PS) comprises a second opening (O2j) capable of allowing a flow of air which has passed through the said grille (CV) to pass through so that it arrives on a front surface (FV), wobei die Platte (PS) mindestens eine erste Öffnung (O1j) aufweist, die geeignet ist, einen Luftstrom, der durch das Kühlergitter (CV) hindurchgetreten ist, zu einer Vorderseite (FV) des Kühlers (RV) hindurchtreten zu lassen, **dadurch gekennzeichnet, dass** die Lichter der Beleuchtungseinheit (BF) Durchdringungslichter sind, und dass die Einrichtung (PT) ein Strahl ist, der quer zwischen zwei gegenüberliegenden Seiten des Fahrzeugs implantiert ist.

2. Fahrzeug nach Anspruch 1, **dadurch gekennzeichnet, dass** die Platte (PS) einen ersten Teil (P1), der den Block (BF) fest trägt, einen zweiten Teil (P2), der den ersten Teil (P1) verlängert und jede erste Öffnung (O1j) umfasst, und einen dritten Teil (P3), der den zweiten Teil (P2) verlängert und an der Ausrüstung (PT) befestigt ist, umfasst.

3. Fahrzeug nach Anspruch 2, **dadurch gekennzeichnet, dass** der zweite Abschnitt (P2) den ersten Abschnitt (P1) nach oben verlängert.

4. Fahrzeug nach einem der Ansprüche 2 und 3, **dadurch gekennzeichnet, dass** der dritte Abschnitt (P3) den zweiten Abschnitt (P2) nach hinten, in Richtung des Kühlers (RV), verlängert.

5. Fahrzeug nach einem der Ansprüche 2 bis 4, **dadurch gekennzeichnet, dass** der erste Teil (P1) eine zweite Öffnung (O2) aufweist, die einen Durchgang für mindestens ein elektrisches Kabel ermöglicht, das zur elektrischen Versorgung des Blocks (BF) bestimmt ist.

6. Fahrzeug nach einem der Ansprüche 2 bis 5, **dadurch gekennzeichnet, dass** der erste Teil (P1) mindestens eine dritte Öffnung (O3) aufweist, die eine Ableitung der von dem Block (BF) erzeugten Kalorien nach hinten ermöglicht.

## Claims

1. Motor vehicle comprising a front part (PV) comprising a grille (CV), a radiator (RV) placed behind the grille, equipment (PT), a lamp unit (BF) comprising a luminous assembly (EL), and a device (D) for supporting the said unit, the said device (D) comprising a plate (PS) suitable for fixedly supporting the said unit (BF) on the equipment (PT) of the front part (PV) between the said radiator (RV) and the said grille (CV), the said plate (PS) comprising at least a first opening (O1j) suitable for allowing a flow of air which has passed through the said grille (CV) to pass through so that it reaches a front face (FV), the said opening (O1j) comprising a second opening (O2j) suitable for allowing a flow of air which has passed through said plate (PS) comprising at least a first opening (O1j) suitable for allowing a flow of air that has passed through said radiator grille (CV) to pass through to a front face (FV) of said radiator (RV), **characterized in that** the lights of the light block (BF) are penetration lights, and **in that** said equipment (PT) is a beam implanted transversely between two opposing lateral sides of the vehicle

2. Vehicle according to claim 1, **characterized in that** said plate (PS) comprises a first part (P1) fixedly supporting said block (BF), a second part (P2) extending said first part (P1) and comprising each first opening (O1j), and a third part (P3) extending said second part (P2) attached to said equipment (PT).

3. Vehicle according to claim 2, **characterized in that** said second portion (P2) extends said first portion (P1) upwards.

4. Vehicle according to one of claims 2 and 3, **characterized in that** said third part (P3) extends said second part (P2) backwards, towards said radiator (RV).

5. Vehicle according to one of claims 2 to 4, **characterized in that** said first part (P1) comprises a second opening (O2) allowing a passage of at least one electric cable intended to supply electrically said block (BF).

6. Vehicle according to one of the claims 2 to 5, **characterized in that** said first part (P1) comprises at least a third opening (O3) allowing an evacuation towards the rear of calories produced by said block (BF).
